(19) Europäisches Patentamt
European Patent Office
Office européen des brevets

(11) **EP 3 222 416 A1**

(12) **EUROPEAN PATENT APPLICATION**

(43) Date of publication:
**27.09.2017 Bulletin 2017/39**

(51) Int Cl.:
***B32B 5/02*** *(2006.01)*      ***B32B 5/24*** *(2006.01)*
***B32B 7/12*** *(2006.01)*      ***B32B 15/14*** *(2006.01)*
***B32B 15/20*** *(2006.01)*

(21) Application number: **16161330.2**

(22) Date of filing: **21.03.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Armacell Enterprise GmbH & Co. KG
12529 Schönefeld OT Waltersdorf (DE)**

(72) Inventors:
• **KOZL'ONKOV, Anton
48153 Münster (DE)**
• **QUANTE, Heribert
37696 Marienmünster (DE)**
• **ZAUNER, Christoph
48366 Laer (DE)**

(74) Representative: **von Füner, Nicolai et al
Von Füner Ebbinghaus Finck Hano
Patentanwälte
Mariahilfplatz 3
81541 München (DE)**

(54) **COMPOSITE MATERIAL**

(57)    The invention describes a composite material comprising a reinforcing, fibrous middle layer (B), between an outer layer (C) comprising a non-perforated, non-combustible foil, and an expanded polymeric core material (A) which consists of at least 250 phr, but less than 800 phr ingredients in total, comprising 100 phr of at least one polymer, comprising at least 35phr of at least one crosslinkable polymer, preferably a crosslinkable elastomer, at least one kind of bound halogen(s), preferably chlorine, of at least 20% by weight with regard to the total polymer content, a process for manufacturing the composite material and the use of said composite material.

Fig.1

EP 3 222 416 A1

**Description**

The present invention relates to a non-combustible composite material with a flexibility and high water vapour resistance, the process for manufacturing of such a composite material and the use of such a composite material.

Prior Art

Elastomeric materials have been used since long time for insulation purposes as expanded material (see e.g. the materials with the trademarks Armaflex®, K-Flex®). However, as elastomers are of organic nature and due to the fact that cellular material is more sensitive to ignition than massive elastomer, said expanded elastomers tend to be flammable to very flammable.

Numerous attempts have been taken to improve the flame retardancy of organic polymer foams, such as by loading the elastomer material with internal flame retardants as it is standard in the rubber industry and/or by applying flame retardant protective layers: one could think of composites where specially flame-protected polymers form the outer layer, but the most widespread approach for fire protection is the use of an outer layer consisting of a metal foil or sheet, mostly aluminium due to applicability and cost issues, often together with one or more inner layer(s) showing no or low combustibility.

This technology has been used in many varieties: aluminium honeycombs filled with rigid foam, outer foil in some varieties, perforated foil, fibres underneath, or foil together with intumescent systems.

Other inventions claim the use of low-combustible fibres or non-combustible fibres (mainly glass fibres) only as an outer layer, sometimes in conjunction with other layers, such as glass fibre coating, fibres in matrix, internal layer low-combustible material, inorganic fibre layer, partially filled with non-combustibles, non-combustible fibre and bamboo layer, fibre on foam-filled honeycombs, fibre reinforced outer resin layer or fibres/foils on intumescent layer. Other patents claim glass fibres as outer layer or the use of multiple fibre layers for building a structure, but they do not target fire performance explicitly. CN 1613640 mentions a double felt layer with flame retardant impregnation; US 5698302 mentions a double glass fibre layer on rigid foam wherein however, the layer is neither described nor intended as fire retardant fibrous material, as it is applied on polymeric material comprising flame retardant resin itself; DE 19640887 claims a layer of fibre-reinforced silicate for fire protection purposes.

All of the above mentioned inventions focus on mainly rigid foams to protect, except GB 2378919, where a rubber-like inner layer is disclosed, however, the whole composite has to be essentially rigid again. In total, all these methods indeed cover a large variety of requirements concerning flame retardancy; however, their individual versatility is limited and their performance is strongly depending on the substrate, on how the layers are applied. Therefore, most of the above mentioned inventions require or at least mention flame retardant properties for the substrate itself, too.

Requirements and flammability test related approvals within the building industry become more and more global, but also more precise and application-related and therefore more challenging (e.g. ASTM E-84, EN 13823), as smoke creation and density are considered in addition to the flammability.

Further flammability tests are described in NIST Technical Note 1628, "A History of Fire Testing" by J. Randall Lawson (U.S. Department of Commerce, Building and Fire Research Laboratory, National Institute of Standards and Technology NIST, Gaithersburg, MD 20899-8661) http://fire.nist.gov/bfripubs/fire09/PDF/f09019.pdf, and Chapter 10 in "Flammability testing of materials used in construction, transport and Mining" by Vivek B Apte; http://www.fpi.fs.fed.us/documnts/pdf2006/fpl_2006_sumathipala001.pdf

**Summary of the invention:**

The present invention is based on the problem to provide a composite material, which combines flexibility and high water vapour resistance of the composite material, and comprises an expanded polymeric core material (A) with a non-combustible classification according to Japanese building standard ISO 5660-1, a high water vapor resistance, low thermal conductivity and an excellent thermal stability.

To solve the above mentioned problem, the present invention provides a composite material comprising:

1) a reinforcing, fibrous middle layer (B), between

2) an outer layer (C), comprising a non-perforated, non-combustible foil, and

3) an expanded polymeric core material (A) which consists of at least 250 phr, preferably at least 300 phr, but less than 800 phr, preferably less than 700 phr ingredients in total, and comprises 100 phr of at least one polymer comprising

a) at least 35phr, preferably at least 50phr of at least one crosslinkable polymer, preferably a crosslinkable elastomer,

b) at least one kind of bound halogen, preferably chlorine, of at least 15%, preferably at least 20%, especially preferred at least 25% by weight with regard to the total polymer content.

Preferred embodiments are disclosed in claims 2 to 15. A further subject-matter is the process for manufacturing the composite material comprising a continuous two-step-extrusion/expansion and lamination process according to claim 16. A still further subject-matter is the use of the composite material according to claim 19.

The halogen is selected from the group consisting of chlorine and bromine. Chlorine is preferred towards bromine, as it has a lower toxicity.

Phr (parts per hundred rubber) in the context of the present invention describes the total amount of all polymers, not limited to rubbers.

All quantities concerning the core material (A) are related to 100 phr of polymer content. The total amount of all ingredients always comprises the aforementioned 100 phr of the polymer, too.

Surprisingly it has been found that a versatile composite material can be obtained by using a specific combination of a reinforcing fibrous middle layer (B) between an outer foil-like layer (C) and an expanded polymeric core material (A). The core material (A) comprises a polymer or a polymer blend comprising at least 35phr of at least one crosslinkable polymer, preferably a crosslinkable elastomer, and at least one kind of bound halogen, preferably chlorine, of at least 20%, preferably at least 25%, especially preferred at least 30% by weight with regard to the total polymer content. The halogen can either be bound to the crosslinkable polymer or to any other polymer. The aforementioned level of 20% by weight of halogen, preferably chlorine, is necessary to pass the tests in 80% of the cases, while a level of 25% ensures a pass of the tests in 100% of the cases. A level of 30% ensures a pass of the tests also at significantly longer testing periods (two to four times).

Such a level of bound halogen, preferably chlorine, is necessary to achieve the required level of hardening in case of fire short term, otherwise the core material (A) would expand and the composite material would fail the tests according to Japanese building standard ISO 5660-1. Additionally, sufficient stability and flame resistance of the composite material can only be achieved with such high levels of halogen, preferably chlorine; otherwise the core layer (A) would start to burn or decompose underneath layers (B) and (C) and thereby the composite material would fail the test, too.

The crosslinkable polymer is preferably a crosslinkable elastomer, which may be any kind of elastomer like Butadiene rubber (BR), Butyl Polymers and Halogenated Butyl Rubber (BIIR/CIIR), chloroprene (CR), Chlorosulfonated polyethylene (CSM/CPE), ethylene propylene diene monomer rubber (EPM/EPDM), ethylene/vinylacetate copolymer (EVM), styrene-butadiene rubber (SBR), epichlorohydrin rubbers (CO/ECO/GECO), Fluoroelastomer (FKM/FPM/FEPM), Propylene Oxide Rubber (GPO), isoprene rubbers (IR/IIR), vinyl-methyl-silicones (VMQ), natural rubber (NR), polyethylene (PE), polyethyleneterephthalate (PET), polybutyleneterephthalate (PBT), preferred are sulphur and/or metal oxide crosslinkable polymers, especially preferred are CR, SBR, NBR, EPDM and BR due to high filling capacity (with fillers, plasticizers, flame retardants, etc.) and best balance between cost and required performance.

The present composite material may further include further polymer(s), which may be a polymer like CSM, CPE/CM, PVC, PVDC, preferred are CPE/CM and PVC as they are either sulphur or metal oxide crosslinkable and/or accept high loadings of fillers, plasticizers, flame retardants etc.. Especially preferred is PVC due to its excellent processability and high level of bound halogen, preferably chlorine.

Preferred is a blend of PVC and CR. The preferred range is from 1:2 to 1:6.

Polyvinyl chloride (PVC) in the context of the present invention includes its homo-, co- and terpolymers.

The core material (A) may additionally comprise at least one plasticizer, at least one filler, at least one crosslinking system and at least one chemical blowing agent. Furthermore, the core material may comprise additional flame retardants and additives to fulfil special demands and regulations defined by the area of application.

The core material (A) may comprise at least 100 phr, preferably at least 150 phr of decomposable filler. Preferred are inorganic fillers that cool down the fire by releasing water at temperatures above 180°C, or dilute or inhibit the oxygen supply of the flame by the release of carbon dioxide, carbon monoxide at temperatures above 180°C, however, the use of such fillers is usually limited to less than 400 phr, preferably less than 300 phr. Especially preferred are aluminium hydroxide (ATH), magnesium hydroxide, huntite and hydromagnesite due to the high level of water release. Furthermore, such materials do not increase the smoke development.

The limitation of inorganic fillers to less than 400 phr, preferably less than 300 phr - which cool down the fire by releasing water at temperatures above 180°C, or dilute or inhibit the oxygen supply of the flame by the release of carbon dioxide, carbon monoxide, etc. at temperatures above 180°C - is necessary to keep the resulting pressure underneath the layers (B) and (C) at a level they can withstand without holes, cracks or other damages which would lead to a failure in the test. Additionally, expansion of the core material (A) needs to be limited to a minimum level otherwise it would fail the tests according to Japanese building standard. However, a certain pressure is necessary or helpful to prevent the material from a degree of shrinkage which would also lead to failure in the test.

An advantage of using such fillers is the increased thermal conductivity when water is released in case of burn. It leads to increased dissipation of heat and therefore increased long term flame resistance in case of burn. A burn through at isolated positions can be prevented.

Surprisingly it has been found that water vapour improves the stability of the core material (A) in case of fire or thermal exposure above 200°C. Due to the fact that water vapour is usually not present during a fire, it had to be incorporated into the core material (A). However, such water needs to be bound during extrusion, expansion, crosslinking, application and potential thermal follow-up treatment.

The covering comprising layer (B) and layer (C) has the purpose of preventing the water vapour to escape from the core material (A). Due to the fact that the diffusion tight layer (C) would require a wall thickness that makes the composite material inflexible if it additionally needs to withstand the mechanical load in case of burn, layer (B) is applied to shield layer (C) from mechanical stress caused by the core material (A).

The core material (A) may comprise at least 15 phr, preferably at least 30 phr, especially preferred at least 50 phr - related to the polymer content - of at least one plasticizer. The plasticizers may have a positive impact on flame retardancy and smoke suppression. Therefore, preferred plasticizers are phosphate plasticizers or chlorinated plasticizers or mixtures thereof. The chlorinated plasticizers are preferably chlorinated paraffins or chlorinated fatty acid substituted glycerines or chlorinated alpha-olefins or mixtures thereof having a chlorine content of at least 20 wt% according to the weight of the core material, preferably at least 30wt%, especially preferred at least 45 wt%, the content of chlorine has been analysed according to DIN 53474, especially preferred are long chain chlorinated plasticizers of C > 17. Such highly chlorinated, long chain materials have the greatest fire retardant impact and are - in contrast to short or medium chain chlorinated plasticizers - not persistent, bio-accumulative or toxic. In addition, such plasticizers are still liquid at room temperature (19°-23°C) and therefore significantly reduce the viscosity even at low processing temperatures (< 80°C).

The phosphate plasticizers can be aliphatic, chloroaliphatic or aromatic phosphoric acid esters or any mixtures thereof. Preferred are phosphoric acid esters of high phosphorous content and low smoke development; especially preferred is diphenyl 2-ethylhexyl phosphate (DPO) due to its marginal smoke emission, low viscosity and low temperature resistance.

The core material (A) may comprise at least 10 phr, preferably at least 20 phr, especially preferred at least 30 phr flame retardants, preferably chlorinated flame retardants, especially prefered are long chain (C > 17) chlorinated paraffins being solid at room temperature (19° - 23°C) and having a chlorine content (according to DIN 53474) of at least 60 wt% or chlorinated cycloaliphatics like Dechlorane A (Dechlorane Plus®), Dechlorane 602 or Dechlorane 603 or mixtures thereof. While increasing the amount of chlorinated flame retardants within the composite material, the amount of synergists can be reduced, leading to a material of equal flame resistance at lower smoke emission.

The core material (A) may comprise at least one synergist. A synergist increases the effectivity of the flame retardants in the reaction to fire in terms of smoke suppression and/or heat release. Preferred synergists are antimony (Sb), zinc (Zn), molybdeneum (Mo), tin (Sn), tungsten (W), bismuth (Bi), arsenic (As), vanadium (V) and/or zirconium (Zr) based materials, e.g. antimony trioxide, antimony pentoxide, zinc stannate, zinc hydroxystannate, zinc borate, zinc hydroxyborate, zinc molybdate, molybdenum oxide, ammonium octamolybdate, stannous oxide, tungsten oxide, bismuth oxide, bismuth oxychloride, arsenic trioxide, arsenic pentoxide, vanadium oxide, zirconium oxide, etc, especially preferred are antimony trioxide and zinc stannate. The best balance of smoke suppression and flame retardancy can be achieved at quantities below 15 phr, preferably below 10 phr.

The core material (A) may comprise at least one crosslinking system such as peroxides or sulphur or metal oxide or thiadiazole based crosslinking systems or mixtures thereof. Preferred are sulphur or metal oxide based crosslinking systems as they lead to lower densities and better mechanical performance (flexibility, bendability, elongation, etc.) which is an important feature for the present composite materials.

The core material (A) may comprise at least one chemical blowing agent (e.g. releasing carbon dioxide, nitrogen or oxygen) chosen from the classes of organic blowing agents and inorganic blowing agents. Preferred are organic blowing agents of nitroso type, azo type or aromatic hydrazide type, especially preferred are azo type blowing agents like azodicarbonamide.

The core material (A) may comprise a heat and/or reversion stabilizer system. The stabilizers can be chosen from the classes of carbon blacks, metal oxides (e.g. iron oxide) and hydroxides (e.g. magnesium hydroxide), metal organic complexes, radical scavengers (e.g. tocopherol derivates), complex silicates (e.g. perlite, vermiculite), and combinations thereof.

The core material (A) may comprise ingredients like biocides, stabilizers (e.g. versus UV, ozone etc.), pigments, dyes etc., of any kind in any ratio, including additives for improving its manufacturing, application and performance, such as inhibitors, retarders, accelerators, etc.

The core material (A) can be mixed by standard methods widespread in the rubber industry, e.g. in a (Banbury®) mixer, single- or twin-screw extruder or on a mill. No specialized equipment is necessary to achieve sufficient dispersion.

The shaping of the claimed material can be carried out in extruders, presses, calanders, etc. Preferred are extruders due to the possibility of easily forming sheets and tubes and crosslink and expand them continuously within a hot air oven, microwave oven, salt bath, etc. Preferred are hot air and microwave ovens, because - among other things - no additional cleaning steps are necessary.

The core material (A) may be expanded to make a foamed product, wherein the closed cell content of the foamed product is at least 80%. The closed cell content is determined by vacuum water absorption and has to be < 10,0%, preferably < 5,0%, especially preferred < 2,5% according to ASTM D 1056.

The core material (A) can be expanded to a density of less than 100 kg/m³, preferably less than 80 kg/m³, especially preferred less than 60 kg/m³ according to DIN EN ISO 845. Densities below 80 kg/m³ and in particular below 60 kg/m³ are preferred as they lead to a lower thermal conductivity.

Further, it has been shown that a specific ageing process further improves the stability of the core material (A). The ageing conditions do also contribute to the fire response. The ageing process may be done in an off-the-shelf ventilated oven. A humidity control is not required. The product is placed in the oven and the duration of ageing is determined by the temperature used. It is preferred that the core material (A) is aged prior to lamination, preferably under conditions which fulfil the following equation:

$$t > 500e^{(-0,03T)}$$

wherein t = "time" (in hours) is the minimum ageing time at a given temperature "T" (°C) and e is the exponential function.

Layer (C) as outer, i.e. outermost layer of the composite material comprises a non-perforated, non-combustible foil, preferably a metal foil (e.g. an aluminium, iron, copper etc. foil). The thickness range for the foil is 1-400 microns, especially preferred are 2-50 microns on the one hand to prevent cracks or holes in case of burn and on the other hand to maintain sufficient flexibility during application. Aluminium is the most preferred material as metal foil due to its good heat conductivity, good sealing property and excellent properties concerning the application (bonding/adhesion, compatibility etc.). Layer (C) reflects the impinging heat caused by the fire and additionally disperses it over the surface. Therefore, small heat spots can be prohibited.

The reinforcing, fibrous middle layer (B) may comprise fibres and/or slivers of any kind as long as they are non-combustible, such as from glass, metal, ceramic or mineral. The fibres or wires may be massive or hollow. The fibre may be in the state of woven or nonwoven.

Generally preferred are fibrous arrangements, i.e. the fibres are arranged in a regular manner and the average mesh size or sieve opening size would be 0.01 to 2.00 mm, preferably 0.10 to 0.80 mm, especially preferably from 0.04 to 0.25 mm; generally the average thread or fibre density would be 5 to 500 per cm, preferably 10 to 250 per cm, especially preferably are 20 to 60 per cm.

Additionally, depending on the type of the fibrous material, especially in respect to weight per length, expressed in the TEX-System (ISO 1144 und DIN 60905) as tex or dtex value or as denier value, both are units for the linear mass density of fibres, yarns and thread, the density of the mat changes, as well as mechanical properties and also the price. The unit dtex is commonly used in fibre industry and is expressed as 1 gram per 10,000 m of fibre. The unit denier is expressed as 1 gram per 9000 m.

Preferably, the dtex value of the fibrous material of the middle layer (B) of the composite material is below 12, further preferably below 10 (or denier below 9), especially preferably below 8.

Samples with dTEX value below 10 behaved almost identically in the test, but with higher (heavier) values the samples exhibited expansion and even peeling off.

Composite materials wherein the fibrous material of the middle layer (B) has a linear mass density below 10 dtex or denier below 9 show decreased peak rate of heat release values (peak HRR), decreased total heat release values (THR) and decreased maximum values of average rate of heat emission (MARHE).These changes of the mechanical properties of the composite material are surprising.

Layer (B) further disperses the heat, thermally insulates core layer (A) and shields layer (C) from mechanical stress caused by the core material (A) (especially in case of burn).

The claimed composite material provides high water vapour transmission (WVT) values of ≥ 3000 or even ≥ 5000 according to EN13469 / EN 12086. For this reason, the application at low temperatures (< 0°C) is feasible, because the object to be insulated is well protected from under insulation corrosion (UIC) through condensation of humidity.

A major advantage of the claimed composite material is the suitability for applications where a non-combustibility classification according to the Japanese building standards is required. Up to now, there is no flexible, organic material available on the market that can pass such requirements.

It is an advantage of the claimed material that it can achieve such classifications without the use of additional, especially boron containing flame retardants, as they are still widespread and standard in the industry.

**Brief description of the Figures**

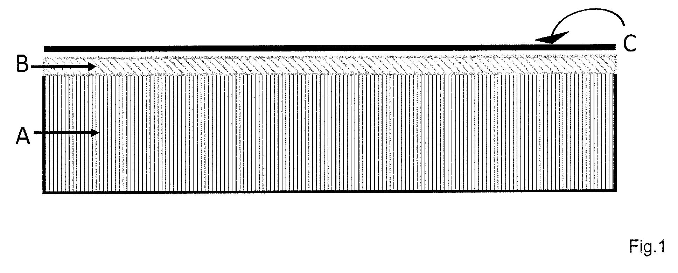

Figure 1: Composite layer according to the invention

Figure 1 is a schematic drawing of the composite material according to the invention, wherein A is the core material, B the reinforcing, fibrous middle layer and C the outermost layer comprising a non-perforated, non-combustible foil.

**Examples**

The core foam used for the innovative examples was based on foam consisting of polyvinylchloride (PVC), polychloroprene (CR) and aluminium hydroxide (ATH) in the proportion of 35 phr PVC, 90 phr CR and 36,5 %wt ATH. In both cases different combinations of glass fibre mat and aluminium foil were tested.

Comparative examples were prepared with the prior art elastomeric foam material AF/Armaflex® (= Elastomeric foam based rubber) in two different combinations of aluminium foil and glass fibre mat.

In the Examples the lamination was done by using a KFK-EL-E1500 lamination line from Meyer, whereby the drive belts may be adjusted in terms of pressure and temperature. In case a thermoplastic adhesive is used, the temperature needs to be set to be higher than the melting point of the adhesive. In these examples the belts were not heated, and pressure was kept low in order not to damage the closed cell structure of the expanded core material A.

In all cases the products were tested in 25 mm thickness, and were supplied by Armacell (Münster, Germany).

**Testing**

According to DIN 5660-1 the material is exposed to fire and the peak rate of heat release (peakHRR), total heat release (THR) and the maximum value of average rate of heat emission (MARHE) are measured. The limiting values are: THR $\leq$ 8 and Peak HRR $\leq$ 200 after 20 minutes of testing. Test performance criteria include the requirement that the material does not exhibit cracking or other damage that allows the backing plate (behind the sample) to be seen, nor the material is allowed to expand in a way that the sample touches the radiator.

Table 1 lists the results for comparative and innovative examples. The reference samples failed for two reasons, peeling off and too high THR. The rest of the comparative samples either exhibited peeling off, cracking (holes) or expansion of the foam which lead to failure. However, the innovative example passed the testing according to DIN 5660-1.

Table 1: Flammability test results of different polymer based foam composite systems according to DIN 5660-1.

| Core foam A | middle layer B | outer layer C | Adhesive | Peak HRR | THR | MARHE | Notes | Result |
|---|---|---|---|---|---|---|---|---|
| AF/ Armaflex | Aluminum foil | Glass fibre mat | NO | 46,5 | 14,2 | 20,1 | Peel off | FAIL |
| | Glass fibre mat | Aluminum foil | NO | 11,0 | 4,5 | 4,5 | Holes | FAIL |
| | | | 990 * | n.a. | n.a. | n.a. | Expans. | FAIL |
| PVC/CR | Aluminum foil | Glass fibre mat | NO | n.a. | n.a | n.a. | Peel off | FAIL |
| | Glass fibre mat | Aluminum foil | NO | 7,9 | 3,9 | 3,9 | | **PASS** |
| Expans. = Expansion 990 * = Solvent-free adhesive Armaflex® SF990 | | | | | | | | |

Surprisingly and on the contrary to previous experience according to other testing standards, the unique combination of halogen, preferably chlorine rich foam with a glass fibre mat as the middle layer and an aluminium foil as the outermost layer does excel in this specific test, providing the first polymeric alternative to glass and mineral wool products.

**Claims**

1.   A composite material comprising

a reinforcing, fibrous middle layer (B), between
an outer layer (C) comprising a non-perforated, non-combustible foil, and
an expanded polymeric core material (A) which consists of at least 250 phr, preferably at least 300 phr, but less than 800 phr, preferably less than 700 phr ingredients in total, and comprises 100 phr of at least one polymer comprising

    a. at least 35phr, preferably at least 50phr of at least one crosslinkable polymer, preferably a crosslinkable elastomer,

    b. at least one kind of bound halogen(s), preferably chlorine, of at least 20%, preferably at least 25%, especially preferred at least 30% by weight with regard to the total polymer content.

2. The composite material according to claim 1 wherein the core material (A) comprises fillers and additives.

3. The composite material according to claim 1 or 2 wherein the core material (A) is crosslinked and expanded.

4. The composite material according to any one of claims 1-3 wherein the core material (A) is expanded to make a foamed product, wherein the closed cell content of the foamed product is at least 80%.

5. The composite material according to anyone of the preceding claims wherein the core material (A) is expanded to a final density of less than 100 kg/m$^3$, preferably below 60 kg/m$^3$.

6. The composite material according to anyone of the preceding claims wherein the fibrous material of the middle layer (B) is glass fibre, metallic, ceramic or mineral fibre.

7. The composite material according to claim 6 wherein the fibrous material of the middle layer (B) is in the form of a woven fabric, preferably unidirectional woven or nonwoven fabric or knitted fabric.

8. The composite material according to claim 7 wherein the fibrous material of the middle layer (B) shows an average mesh or sieve opening size for the tissue of 0.01 to 0.80 mm, preferably from 0.08 to 0.5 mm and an average thread or fibre density from 5 to 250 per cm, preferably 40 to 100 per cm.

9. The composite material according to claims 7 or 8 wherein the fibrous material of the middle layer (B) has a linear mass density of below 13 dtex, preferably below 10 dtex, especially preferred below 8 dtex.

10. The composite material according to anyone of the preceding claims wherein the metal foil of the outer layer (C) is aluminium.

11. The composite material according to anyone of the preceding claims wherein the prefabricated, i.e. pre-laminated composite of layers (B) and (C) are applied with an adhesive and/or hot melt and/or thermoplastic on one or more sides of the core material (A).

12. The composite material according to anyone of the preceding claims wherein the core material (A) is aged prior to lamination according to following formula: $t > 500e^{(-0,03T)}$.

13. The composite material according to anyone of the preceding claims wherein additional layers are applied for protection, reinforcement and decoration purposes.

14. The composite material according to anyone of the preceding claims which shows a water vapour diffusion barrier property of at least $\mu$ 2500, preferably at least $\mu$ 5000, especially preferred at least $\mu$ 10000.

15. The composite material according to anyone of the preceding claims which has a thermal conductivity of less than 0.080 W/m*K at 0 °C, preferably less than 0.040 W/m*K at 0 °C.

16. A process for manufacturing the composite material according to anyone of claims 1-15 comprising a continuous two-step-extrusion/expansion and lamination step.

17. The process according to claim 16 wherein a prefabricated composite of at least layer (B) and layer (C) is laminated onto layer (A).

18. The process according to claim 16 or 17 comprising an ageing step of layer (A) under conditions which fulfil the following formula: $t > 500e^{(0.03T)}$.

**19.** The use of a composite material according to one of claims 1-15 for thermal and/or acoustic insulation and/or acoustic and/or vibration damping insulation and/or fire protection insulation inside and outside of structures, vessels, containers and pipes, such as walls, ceilings, floors, roofs, tanks, tubes, and ducts.

Fig.1

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 457 723 A1 (ARMACELL ENTERPRISE GMBH [DE]) 30 May 2012 (2012-05-30) * the whole document * ----- | 1-19 | INV. B32B5/02 B32B5/24 B32B7/12 B32B15/14 B32B15/20 |
| A,D | GB 2 378 919 A (RUBEROID BUILDING PRODUCTS LTD [GB]) 26 February 2003 (2003-02-26) * the whole document * ----- | 1-19 | |
| A | WO 01/09404 A2 (HANKUK FIBER GLASS CO LTD [KR]; KIM YOUNGSOO [KR]) 8 February 2001 (2001-02-08) * page 10, line 24 - page 12, line 13; figure 2 * ----- | 1-19 | |

TECHNICAL FIELDS
SEARCHED      (IPC)

B32B

The present search report has been drawn up for all claims

| Place of search | Date of completion of the search | Examiner |
|---|---|---|
| The Hague | 8 September 2016 | Songy, Odile |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 16 16 1330

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2016

| Patent document cited in search report | | | Publication date | Patent family member(s) | | | Publication date |
|---|---|---|---|---|---|---|---|
| EP | 2457723 | A1 | 30-05-2012 | EP | 2457723 | A1 | 30-05-2012 |
| | | | | ES | 2461897 | T3 | 21-05-2014 |
| | | | | US | 2012135202 | A1 | 31-05-2012 |
| GB | 2378919 | A | 26-02-2003 | NONE | | | |
| WO | 0109404 | A2 | 08-02-2001 | AU | 6125599 | A | 19-02-2001 |
| | | | | KR | 20010011802 | A | 15-02-2001 |
| | | | | KR | 20020020798 | A | 15-03-2002 |
| | | | | WO | 0109404 | A2 | 08-02-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1613640
- US 5698302 A
- DE 19640887
- GB 2378919 A

**Non-patent literature cited in the description**

- A History of Fire Testing. **J. RANDALL LAWSON.** NIST Technical Note 1628. National Institute of Standards and Technology NIST
- **VIVEK B APTE.** Flammability testing of materials used in construction, transport and Mining